Europäisches Patentamt

European Patent Office

Office européen des brevets

(11) Veröffentlichungsnummer: **0 336 015 B1**

# EUROPÄISCHE PATENTSCHRIFT

(45) Veröffentlichungstag der Patentschrift: **15.01.92**

(51) Int. Cl.⁵: **G01B 3/20**

(21) Anmeldenummer: **88121076.9**

(22) Anmeldetag: **16.12.88**

(54) **Messwerkzeug.**

(30) Priorität: **01.04.88 DE 3811202**

(43) Veröffentlichungstag der Anmeldung:
**11.10.89 Patentblatt 89/41**

(45) Bekanntmachung des Hinweises auf die
Patenterteilung:
**15.01.92 Patentblatt 92/03**

(84) Benannte Vertragsstaaten:
**CH DE FR GB IT LI**

(56) Entgegenhaltungen:
**EP-A- 0 136 495**
**FR-A- 1 375 242**
**GB-A- 2 021 269**
**GB-A- 2 064 775**

(73) Patentinhaber: **CARL MAHR GMBH & CO.**
**Plochinger Strasse 23-27**
**W-7300 Esslingen(DE)**

(72) Erfinder: **Mahr, Carl F., Dipl.-Ing.**
**Waldackerweg 71**
**W-7300 Esslingen a.N.(DE)**

(74) Vertreter: **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Meßwerkzeug mit den Merkmalen des Oberbegriffes des Anspruches.

Aus der Praxis ist eine digital anzeigende Schieblehre bekannt, bei der der Meßschieber auf einer Seite eine Aufnahmeeinrichtung für einen lösbar anzubringenden Meßschnabel trägt. Auch die Schiene trägt an einem Ende eine Aufnahmeeinrichtung für einen lösbar anzubringenden Meßschnabel, wobei diese Aufnahmeeinrichtung gegenüber der Längsachse der Schiene denselben radialen Abstand hat wie die Aufnahmeeinrichtung des Meßschiebers. Eine solche Schieblehre wird beispielsweise in FR-A-1 375 242 beschrieben.

Es soll hierdurch möglich sein, das Grundgerät der Schieblehre, bestehend aus Schiene und Meßschieber, an die unterschiedlichsten Meßaufgaben anpassen zu können, indem lediglich unterschiedliche Meßschnäbel in die Aufnahmeeinrichtungen eingesetzt werden. So gibt es für die bekannte Schieblehre Meßschnäbel zur Innenmessung, Meßschnäbel zur Bestimmung des Durchmessers von mehrschneidigen Gewindebohrern und Fräsern, Meßschnäbel zum Messen des Lochabstandes u.dgl. mehr.

Die absolute Lage der Meßschnäbel spielt bei der bekannten Schieblehre keine Rolle, da wegen der elektronischen Anzeige die Schieblehre an jeder beliebigen Stelle auf null gesetzt werden kann, so daß sich die bekannte Schieblehre jederzeit nach dem Wechseln der Meßschnäbel durch einfaches Schließen oder Anlegen an ein Normal kalibrieren läßt.

Da bei der bekannten Schieblehre die Aufnahmeeinrichtungen nur auf einer Seite vorgesehen sind, tritt beim Messen, insbesondere bei Werkstükken, die in die Bearbeitungsmaschine eingespannt sind, häufig die Situation auf, daß die Anzeige entweder auf dem Kopf steht oder sich auf der dem Benutzer abgekehrten Seite befindet. Im einen Falle sind Irrtümer beim Ablesen nicht ausgeschlossen, denn die Zahlen werden bei den elektronischen Schieblehren durch sogenannte Siebensegmentanzeigen erhalten, bei denen die Ziffer aus einzelnen Balken zusammengesetzt sind. Diese Art der Zahlendarstellung kann bei kopf stehenden Zahlen durchaus zu Ablesefehlern führen.

Im anderen Falle, wenn der Benutzer bei der Messung die Rückseite des Meßwerkzeugs sieht, muß er beim Abnehmen des Meßwerkzeuges sorgfältig darauf achten, den Meßschieber auf der Schiene nicht zu verstellen, um dann die Anzeige ablesen zu können.

Beides ist im Werkstattbereich außerordentlich unbefriedigend.

Aufgabe der Erfindung ist es deswegen, ein Meßwerkzeug zu schaffen, bei dem weitgehend unabhängig von der Lage des Meßortes gegenüber der Schiene immer eine aufrechtstehende und/oder auf der richtigen sichtbaren Seite liegende Meßwertanzeige vorliegt.

Diese Aufgabe wird erfindungsgemäß durch das Meßwerkzeug mit den Merkmalen des Anspruches 1 gelöst.

Dadurch, daß sowohl der Meßschieber als auch die Schiene einen weiteren Satz von Aufnahmeeinrichtungen für die Meßschnäbel tragen, können die Meßschnäbel wahlweise entweder in der bisher gebräuchlichen Weise eingesetzt werden, nämlich so, daß sie bei aufrechtstehender seitenrichtiger Meßwertanzeige auf den Benutzer zu weisen oder sie können an der anderen Seite befestigt werden, wodurch sie vom Benutzer weg weisen. Das neue Meßwerkzeug läßt sich deswegen entsprechend den Bedingungen am Meßort bedienungsfreundlich einrichten, damit bei an den Prüfling angelegten Meßschnäbeln die Anzeige aufrechtsteht und dem Benutzer zugekehrt ist. Er ist damit in der Lage, in jedem Falle fehlerfrei den Meßwert ablesen zu können, und zwar ohne vorher das Meßwerkzeug von dem Prüfling wegnehmen zu müssen.

Ein Umrüsten ist jederzeit möglich, wenn die Aufnahmeeinrichtungen an der Schiene und dem Meßschieber untereinander gleich sind. Es ist aber auch möglich, nur die Aufnahmeeinrichtung der Schiene und die des Meßschiebers jeweils paarweise gleich zu gestalten, damit die Meßschnäbel nicht zwischen der Schiene und dem Meßschieber getauscht werden können.

Verkantungen der Meßschnäbel in den Aufnahmeeinrichtungen haben keinen Einfluß auf die Parallelität der Meßschnäbel, wenn jede Aufnahmeeinrichtung eine parallel zu der Längsachse der Schiene sich erstreckende Auflagefläche aufweist, wobei bevorzugt die Auflagefläche der Schiene und die des Meßschiebers in einer gemeinsamen Ebene liegen. Selbst wenn die Meßschnäbel um ihre Längsachse, die senkrecht auf der Längsachse der Schiene stehen, verdreht sind, bleiben die Meßschnäbel dennoch zueinander parallel.

Um jedoch ein mögliches Verdrehen der Meßschnäbel um die Längsachse auszuschließen, kann an jeder Aufnahmeeinrichtung eine Zentriereinrichtung und an dem Meßschnabel eine dazu komplementäre Zentriereinrichtung vorgesehen sein. Diese Zentriereinrichtung kann im einfachsten Falle aus einer Nut bestehen, die bevorzugt in Längsrichtung der Schiene verläuft. Diese Nut kann eine Weite haben, die der Dicke der Meßschnäbel entspricht, wodurch sich die Fertigung der Meßschnäbel wesentlich vereinfacht.

Eine einfache und unproblematisch zu handhabende Klemmeinrichtung für die Meßschnäbel besteht aus einer oder mehreren Klemmschrauben, die durch einen an dem Meßschnabel angeformten Ansatz hindurchführen und in entsprechende Gewindebohrungen der Aufnahmeeinrichtung eingedreht sind.

Wenn das Meßwerkzeug mit einer digitalen elektronisch arbeitenden Anzeige ausgerüstet ist, können die Meßschnäbel der Schiene unmittelbar an dieser befestigt sein, da die Meßeinrichtung unabhängig von der Lage der Meßschnäbel, bezogen auf die Längserstreckung der Schiene, auf null gesetzt werden kann. Wenn jedoch das Meßwerkzeug rein mechanisch arbeitet und auf der Schiene eine Skalenteilung trägt, ist es, um die Nullstellung bei undefinierter Lage der Meßschnäbel nach dem Umrüsten zu ermöglichen, von Vorteil, wenn die Meßschnäbel mit der Schiene nicht unmittelbar verbunden sind, sondern auf einem weiteren auf der Schiene geführten Schieber sitzen, der in einer entsprechenden Stellung geklemmt werden kann.

In der Zeichnung sind Ausführungsbeispiele des Gegenstandes der Erfindung dargestellt. Es zeigen:

Fig. 1    ein Meßwerkzeug gemäß der Erfindung mit einer digitalen Anzeigeeinrichtung in einer Draufsicht,

Fig. 2    das Meßwerkzeug nach Fig. 1, geschnitten entlang einer Linie II-II nach Fig. 1 in einer Ansicht von vorne,

Fig. 3    das Meßwerkzeug nach Fig. 1 mit auf der anderen Seite angesetzten Meßschnäbeln und

Fig. 4    ein Meßwerkzeug gemäß der Erfindung mit umsetzbaren Meßschnäbeln und Skalenanzeige in einer Draufsicht.

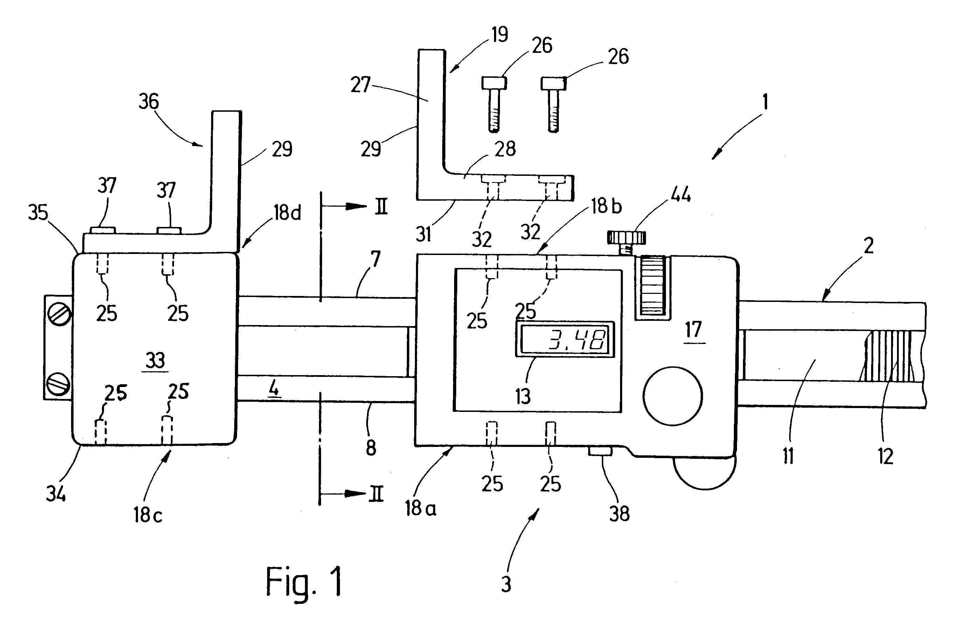

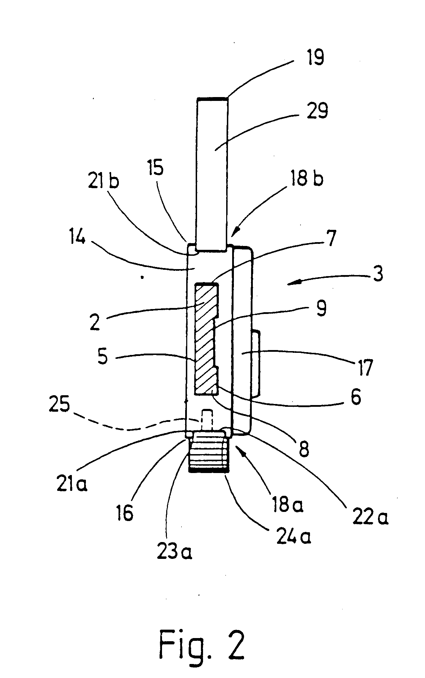

Die Fig. 1 und 2 zeigen eine Schiebelehre 1 mit einer geraden prismatischen Schiene 2, auf der ein Meßschieber 3 spielfrei geführt ist. Der eine etwa quaderförmige Gestalt aufweisende Meßschieber 3 enthält hierzu eine in seiner Längsrichtung durchgehende Öffnung 4, durch die die Schiene 2 hindurchführt und die in ihrem Querschnitt an das Profil der Meßschiene 2 angepaßt ist. Die Schiene 2 trägt zwei parallel mit Abstand zueinander verlaufende Flachseiten 5 und 6, die die Ober- und die Unterseite der Schiene 2 bilden und zwischen denen sich zwei Schmalseiten 7 und 8 erstrecken, die ebenfalls parallel und mit Abstand voneinander in Längsrichtung der Schiene 2 sich erstrecken. Auf der Oberseite 6 befindet sich eine flache Nut 9, in der, abgedeckt durch ein Band 11, ein Strichgitter 12 mit quer zur Längsachse der Schiene 2 sich erstreckenden Strichen eingeklebt ist. Dieses Strichgitter 12 wirkt mit einer in dem Meßschieber 3 untergebrachten elektronischen Anzeigeeinrichtung zusammen, deren Zifferanzeige mit 13 bezeichnet ist und die auf der Vorderseite des Meßschiebers 3 sichtbar ist.

Der Meßschieber 3 enthält einen formsteifen Grundkörper 14 mit zwei in Längsrichtung des Meßschiebers 3 verlaufenden Schmalseiten 15 und 16, die sich parallel zu den Schmalseiten 7 und 8 der Schiene 2 erstrecken. In dem Grundkörper 14 befindet sich die durchgehende Öffnung 4 und außerdem bildet der Grundkörper 14 zusammen mit einer auf der Oberseite der angebrachten aus Kunststoff bestehenden Abdeckung 17 das Gehäuse für die elektronische Anzeigeeinrichtung.

An seinen beiden Schmalseiten 15 und 16, die die Vorder-und die Rückseite des Meßschiebers 3 bilden, ist der Grundkörper 14 mit zwei Aufnahmeeinrichtungen 18a und 18b für einen bei 19 schematisch veranschaulichten Meßschnabel versehen. Die beiden Aufnahmeeinrichtungen 18a und 18b sind untereinander gleich, weshalb im folgenden nur der Aufbau der Aufnahmeeinrichtung 18a ausführlich beschrieben ist. Für die Gestaltung der Aufnahmeeinrichtung 18b gilt sinngemäß dasselbe.

Die Aufnahmeeinrichtung 18a besteht aus einer in Längsrichtung der Vorderseite 16 des Meßschiebers 3 verlaufenden Nut 21a, die eine verhältnismäßig geringe Tiefe aufweist und von einem ebenen Grund 22a sowie zwei mit Abstand zueinander parallel verlaufenden Flanken 23a bzw. 24a begrenzt ist. In dem Grund 22a der Nut 21a, der parallel zu der Schmalseite 8 ist, befinden sich im Abstand voneinander zwei Gewindesacklöcher 25, die rechtwinklig zu der Vorderseite 16 verlaufen; sie dienen der Aufnahme zweier Kopfschrauben 26 zum Festklemmen des Meßschnabels 19.

Der Meßschnabel 19 ist von zwei Schenkeln 27 und 28 gebildet, von denen der Schenkel 27 die eigentliche Meßfläche 29 trägt, während der Schenkel 28 ein Fuß ist, der mit der Klemmeinrichtung 18 zusammenwirkt. Der Fuß 28 erstreckt sich bei dem gezeigten, stark schematisierten Meßschnabel 19 rechtwinklig zu der Meßfläche 29 und damit in Längsrichtung parallel zu der Schiene 2. An seiner planen Unterseite 31 weist er eine Breite auf, die der Weite der Nut 21 entspricht, so daß er praktisch ohne Spiel in die Aufnahmeeinrichtung 18 einzusetzen ist. Für die beiden Befestigungsschrauben 26 sind in dem Schenkel oder Fuß 28 des Meßschnabels 19 zwei mit einer Flachsenkung versehenen Durchgangsbohrungen 32 enthalten, die mit den Gewindebohrungen 25 fluchten, damit die Schrauben 26 durch den Fuß 28 in den Meßschieber 3 eingeschraubt werden können. Beim Festziehen der Schrauben 26 wird der Meßschnabel 19 an dem Meßschieber 3 fixiert. Die Lage in Richtung senkrecht zu der Ober- und der Unterseite 5, 6 der Schiene 2 ist durch die Lage der Nut 21 der Aufnahmeeinrichtung 18 festgelegt.

Beide Aufnahmeeinrichtungen 18a und 18b des Meßschiebers 3 haben von der jeweils benachbarten Schmalseite 7 und 8 der Schiene 2 jeweils den gleichen Abstand.

Am Kopf der Schiene 2 ist ein etwa quaderförmiger Meßschnabelträger 33 starr befestigt, der etwa denselben Querschnitt wie der Meßschieber 3 hat. Der Meßschnabelträger 33 weist ebenfalls zwei Schmalseiten 34 und 35 auf, die den Schmalseiten 7 und 8 der Schiene 2 benachbart sind und in deren Längsrichtung verlaufen. Die beiden Schmalseiten 34 und 35 sind mit weiteren Aufnahmeeinrichtungen 18c und 18d versehen, die in der gleichen Weise gestaltet sind wie die Aufnahmeeinrichtungen 18a und 18b, die oben ausführlich erläutert sind. Sie dienen ebenfalls der Aufnahme eines Meßschnabels, beispielsweise des Meßschnabels 36, der in derselben Weise gestaltet ist wie der Meßschnabel 19 und ebenfalls mittels zweier Kopfschrauben 37 in einer der Aufnahmeeinrichtungen 18 des Meßschnabelträgers 33 zu fixieren ist.

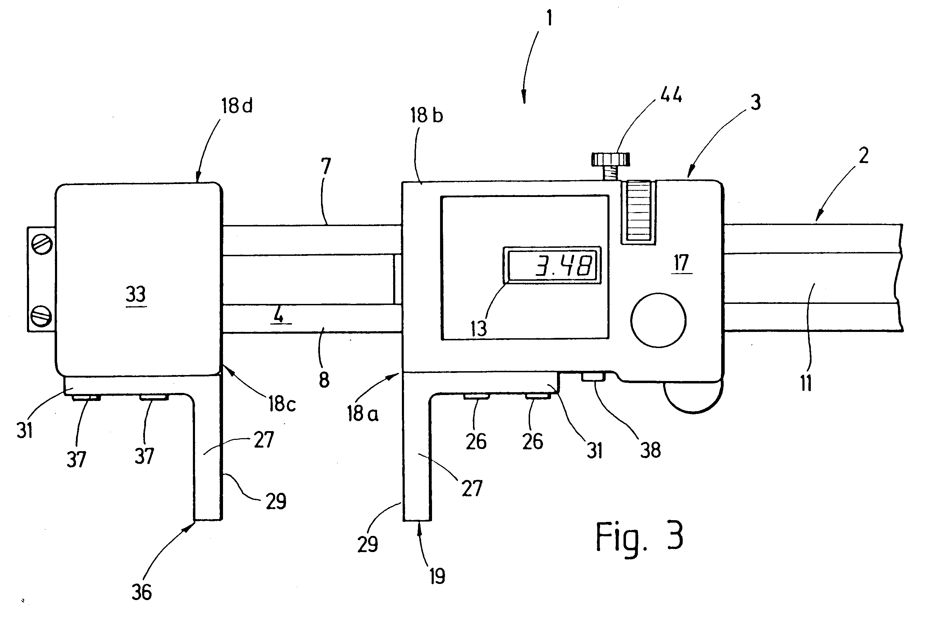

Aufgrund der beschriebenen Ausführung der neuen Schieblehre 1 können die beiden Meßschnäbel 19 und 36 entweder, wie in Fig. 1, an der Rückseite der Schieblehre 1, die in Fig. 2 oben liegt, befestigt werden oder sie können nach lösen der Schrauben 37 und 26 zur Vorderseite hin umgesetzt werden, wie dies Fig. 3 zeigt. Hierdurch entsteht eine Schieblehre 1, die denselben Aufbau zeigt wie die handelsüblichen Schieblehren mit festen unveränderlichen Meßschnäbeln. Die Lage der Meßschnäbel 19 und 36 können bei der neuen Schieblehre 1 entsprechend den Bedingungen am Meßort gewählt werden, indem einfach die Befestigungsschrauben 26 und 37 herausgeschraubt werden und die Meßschnäbel 19 und 36 auf derjenigen Seite der Schieblehre 1 eingesetzt werden, daß beim Messen am Prüfling die Anzeigeeinrichtung 13 mit aufrechtstehenden Zahlen ablesbar ist. Nach dem Einsetzen der Füße 28 der Meßschnäbel 19 und 36 werden die Befestigungsschrauben 26 und 37 eingedreht und festgezogen. Da ihre Lage in Längsrichtung durch die Befestigungsschrauben 26 und 37 in der in Längsrichtung der Schiene 2 sich erstreckenden Nut 21 nicht festgelegt ist, können Lageabweichungen beim Umsetzen der Meßschnäbel 19 und 36 von der einen auf die andere Seite auftreten. Um diese Lageabweichungen zu berücksichtigen, wird die Schiebelehre 1 geschlossen, indem der Meßschieber 3 auf den Meßschnabelträger 33 zu bewegt wird, solange, bis die beiden Meßschnäbel 19 und 36 mit ihren Meßflächen 29 aneinanderstoßen. Durch Nullsetzen der elektronischen Anzeigeeinrichtung an einem Bedienknopf 38 wird die Schiebelehre 1 normiert.

Es versteht sich, daß anstelle der gezeigten geraden Meßschnäbel 19 und 36 auch jede andere bekannte Form von Meßschnäbeln eingesetzt werden kann, solange sie einen Fuß aufweisen, der in derselben Weise gestaltet ist wie der Fuß 28 und auch dessen Abmessungen hat.

Da bei der gezeigten Schiebelehre 1 sämtliche Aufnahmeeinrichtungen 18 nicht nur gleiche Gestalt, sondern auch gleiche Abmessungen haben und jeweils gleich weit von der benachbarten Schmalseite 7, 8 der Schiene 2 entfernt sind, können die Meßschnäbel 19 und 36 beliebig umgesetzt und vertauscht werden.

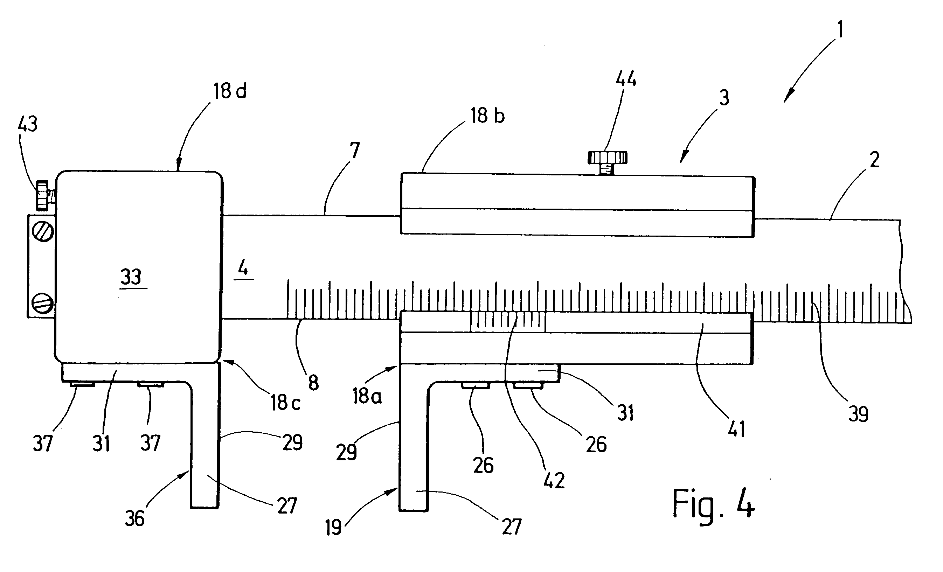

Die Möglichkeit, die Meßschnäbel 19 und 36 von der Vorderseite der Schiebelehre 1 auf deren Rückseite umzusetzen, ist nicht auf Schiebelehren mit elektronischer Digitalanzeige beschränkt, die jederzeit auf null gesetzt werden können. Wie das Ausführungsbeispiel nach Fig. 4 zeigt, kann auch eine mechanisch analog anzeigende Schiebelehre mit umsetzbaren Meßschnäbeln 19 und 36 versehen werden.

Die Schiebelehre 1 nach Fig. 4 trägt auf ihrer Schiene 2 eine in Längsrichtung verlaufende Skala 39 mit der üblichen Millimeter- oder Zolleinteilung. Der Meßschieber 3 ist an seiner Oberseite offen und hat ein im Querschnitt C-förmiges Profil, so daß er die Oberseite 4 der Meßschiene 2 von den Schmalseiten 7 und 8 her nur geringfügig in bekannter Weise umgreift. Hierdurch entsteht in dem Meßschieber 3 eine längliche Öffnung, durch die hindurch die Skala 39 sichtbar ist. An einem Rand 41 dieser Öffnung ist der Meßschieber 3 mit einem Nonius 42 versehen. Im übrigen ist der Meßschieber 3 auch bei dem Ausführungsbeispiel nach Fig. 4 mit Aufnahmeeinrichtungen 18 versehen, die mit den Aufnahmeeinrichtungen 18 des vorherigen Ausführungsbeispieles identisch sind, so daß der Meßschnabel 19, der wiederum genauso gestaltet ist wie der Meßschnabel 19 aus Fig. 1, wahlweise also an der Vorder- oder an der Rückseite des Meßschiebers 3 angebracht werden kann; Die Vorder- und die Rückseite des Meßschiebers liegen in der Zeichnung unten bzw. oben.

Da der Meßschnabel 19 in seiner zugehörigen Aufnahmeeinrichtung 18, bezogen auf die Längsrichtung der Schiene 2, nicht exakt festgelegt ist, sondern entsprechend dem Spiel der Befestigungsschrauben 26 in den Durchgangsöffnungen 32 beliebig positioniert werden kann, kann ein Versatz der Nullstellung des Meßschiebers 3 gegenüber der Skala 39 und der Lage der Meßfläche 29 des Meßschnabels 19 auftreten. Es ist deswegen, abweichend vom vorhergehenden Ausführungsbeispiel, der Meßschnabelträger 33 ebenfalls als Schieber ausgeführt, der spielfrei auf der Schiene 2 längsverschieblich geführt ist. Zusätzlich ist er mit einer Klemmschraube 43 ausgestattet, um ihn an jeder beliebigen Stelle der Schiene 2 klemmen zu können. Ansonsten entspricht seine äußere Gestaltung der Gestaltung des Meßschnabelträgers 33 aus Fig. 1, d.h. er ist ebenfalls mit Aufnahmeeinrichtungen 18 für Meßschnäbel versehen.

Bei der Schiebelehre 1 nach Fig. 4 geschieht das Nullsetzen nach dem Umsetzen der Meßschnäbel 19 und 36 dadurch, daß der Meßschieber 3 auf der Schiene 2 solange verschoben wird, bis die Nullmarke des Nonius 42 mit der Nullmarke der Skala 39 übereinstimmt. In dieser Stellung wird der Meßschieber 3 mittels seiner Klemmschraube 44 auf der Schiene 2 geklemmt und es kann nun nach Lösen der Klemmschraube 43 der Meßschnabelträger 33 auf der Meßschiene 2 an den Meßschieber 3 herangeschoben werden, bis die Meßflächen 29 der beiden Meßschnäbel 19 und 36 aneinanderliegen. In dieser Stellung wird die Klemmschraube 43 erneut angezogen, womit die Schiebelehre 1 erneut normiert ist. Das Messen kann nun in der üblichen Weise erfolgen, wobei jedoch die Meßschnäbel 19 und 36 an der Schieblehre 1 eine Lage haben, die ein bequemes Ablesen ermöglichen.

**Patentansprüche**

1. Meßwerkzeug mit einer länglichen prismatischen Schiene, die zwei parallel und im Abstand voneinander in Längsrichtung verlaufende Flachseiten (4, 5) sowie zwischen den Flachseiten (4,5) in Längsrichtung sich erstreckende Schmalseiten (7, 8) aufweist, mit wenigstens einem auf der Schiene (2) längsverschieblich geführten Meßschieber (3), der eine Aufnahmeeinrichtung (18a) für einen lösbar daran zu befestigenden Meßschnabel (19) trägt, sowie mit einer weiteren, mit der Schiene (2) verbundenen Aufnahmeeinrichtung (18c) zur lösbaren Anbringung eines weiteren Meßschnabels (36), wobei beide Aufnahmeeinrichtungen (18a, 18c) auf derselben Seite bezüglich der Längsachse der Schiene (2) liegen, dadurch gekennzeichnet, daß sowohl an dem Meßschieber (3) als auch an der Schiene (2) je eine weitere Aufnahmeeinrichtung (18b, 18d) zur lösbaren Anbringung von Meßschnäbeln (19, 36) vorgesehen sind und daß die beiden Aufnahmeeinrichtungen der Schiene (2) sowie die beiden Aufnahmeeinrichtungen (18a, 18b) des Meßschiebers (3) jeweils an bezüglich der Längsachse der Schiene (2) einander gegenüberliegenden Seiten angeordnet sind.

2. Meßwerkzeug nach Anspruch 1, dadurch gekennzeichnet, daß die auf entgegengesetzten Seiten bezüglich der Längsachse der Schiene (2) liegenden Aufnahmeeinrichtungen (18) untereinander gleich sind und paarweise gleichen Abstand von der benachbarten Schmalseite (7, 8) der Schiene (2) aufweisen.

3. Meßwerkzeug nach Anspruch 1, dadurch gekennzeichnet, daß alle vier Aufnahmeeinrichtungen (18) untereinander gleich sind und alle gleichen Abstand von der benachbarten Schmalseite (7, 8) der Schiene (2) aufweisen.

4. Meßwerkzeug nach Anspruch 1, dadurch gekennzeichnet, daß jede Aufnahmeeinrichtung (18) eine parallel zu der Längsachse der Schiene ( 2) sich erstreckende Auflagefläche (22) aufweist und daß die Auflageflächen (22) an der Schiene (2) und an dem Meßschieber (3) die jeweils auf einer Seite bezüglich der Längsachse der Schiene (2 ) liegen, in einer gemeinsamen Ebene liegen.

5. Meßwerkzeug nach Anspruch 4, dadurch gekennzeichnet, daß die Auflageflächen (22) für die Meßschnäbel (19, 36) ebene Flächen sind, die parallel zur Längsachse der Schiene (2 ) und rechtwinklig zu deren Flachseite (5, 6) verlaufen.

6. Meßwerkzeug nach Anspruch 1, dadurch gekennzeichnet, daß jede Aufnahmeeinrichtung (18) ein Klemmittel (25, 26, 37) zum Klemmen des zugehörigen Meßschnabels (19, 36) aufweist.

7. Meßwerkzeug nach Anspruch 6, dadurch gekennzeichnet, daß das Klemmittel jeder Aufnahmeeinrichtung (18) von wenigstens einer Gewindebohrung (25) sowie wenigstens einer Klemmschraube (26, 37) gebildet ist, die durch eine Befestigungsbohrung eines an dem Meßschnabel (32) angeformten Befestigungsfortsatzes (28) hindurchführt.

8. Meßwerkzeug nach Anspruch 1, dadurch gekennzeichnet, daß zum lagerichtigen Positionieren des Meßschnabels (19, 36) in der jeweiligen Aufnahmeeinrichtung (18) jede Aufnahmeeinrichtung (18) eine Zentriereinrichtung (21) und der Meßschnabel (19,36) eine komplementäre Zentriereinrichtung (28) aufweist.

9. Meßwerkzeug nach Anspruch 8, dadurch gekennzeichnet, daß eine der Zentriereinrichtungen von einer Nut (21) gebildet ist, die sich parallel zu der Längsachse der Schiene (2) erstreckt.

10. Meßwerkzeug nach Anspruch 1, dadurch gekennzeichnet, daß die Aufnahmeeinrichtungen (18) der Schiene (2) an einem Schieber (33) ausgebildet sind, der längsverschieblich und arretierbar auf der Schiene sitzt.

11. Meßwerkzeug nach Anspruch 1, dadurch gekennzeichnet, daß die Schiene ( 2) auf einer ihrer Flachseiten (6) eine Maßeinteilung (39) trägt, die mit einer Meßmarke (42) an dem Meßschieber (3) zusammenwirkt.

12. Meßwerkzeug nach Anspruch 1, dadurch gekennzeichnet, daß die Schiene (2 ) auf einer ihrer Flachseiten (6) ein Strichgitter (12) trägt, das mit einer elektronischen Meß- und Anzeigeeinrichtung (13) zusammenwirkt, die in dem Meßschieber (3) untergebracht ist.

## Claims

1. A measuring tool, having: an elongate prismatic bar having two flat sides (4, 5) extending spaced-out parallel longitudinally and narrow sides (7, 8) extending longitudinally between the flat sides (4, 5); at least one measuring slide (3) guided longitudinally slidably on the bar (2) and bearing a receiving means (18a) for a measuring jaw (19) to be attached releasably thereto; and a further receiving means (18c) connected to the bar (2) for the releasable attachment of a further measuring jaw (36), the two receiving means (18a, 18c) being disposed on the same side in relation to the longitudinal axis of the bar (2), characterized in that a further receiving means (18b, 18d) is disposed on the measuring slide (3) and the bar (2) respectively for the releasable attachment of measuring jaws (19, 36), and the two receiving means of the bar (2) and the two receiving means (18a, 18b) of the measuring slide (3) are respectively disposed on opposite sides in relation to the longitudinal axis of the bar (2).

2. A measuring tool according to claim 1, characterized in that the receiving means (18) disposed on opposite sides in relation to the longitudinal axis of the bar (2) are identical with one another and are in pairs at the same distance from the adjoining narrow side (7, 8) of the bar (2).

3. A measuring tool according to claim 1, characterized in that all four receiving means (18) are identical with one another and are all at the same distance from the adjoining narrow side (7, 8) of the bar (2).

4. A measuring tool according to claim 1, characterized in that each receiving means (18) has a bearing surface (22) extending parallel with the longitudinal axis of the bar (2) and the bearing surfaces (22) on the bar (2) and the measuring slide (3), which are respectively disposed on one side in relation to the longitudinal axis of the (2), lie in a common plane.

5. A measuring tool according to claim 4, characterized in that the bearing surfaces (22) for the measuring jaws (19, 36) are flat surfaces which extend parallel with the longitudinal axis of the the bar (2) and at right angles to its flat side (5, 6).

6. A measuring tool according to claim 1, characterized in that each receiving means (18) has a clamping means (25, 26, 37) for clamping the associated measuring jaw (19, 36).

7. A measuring tool according to claim 6, characterized in that the clamping means of each receiving means (18) is formed by at least one screwthreaded bore (25) and at least one clamping screw (26, 37) extending through a fastening bore in a fastening extension (28) formed on the measuring jaw (32).

8. A measuring tool according to claim 1, characterized in that for the correct positioning of the measuring jaw (19, 36) in the particular receiving means (18), each receiving means (18) has a centring means (21) and the measuring jaw (19, 36) has a complementary centring means (28).

9. A measuring tool according to claim 8, characterized in that one of the centring means is formed by a groove (21) which extends parallel with the longitudinal axis of the bar (2).

10. A measuring tool according to claim 1, characterized in that the receiving means (18) of the bar (2) are provided on a slide (33) which is disposed longitudinally slidably and lockably on the bar.

11. A measuring tool according to claim 1, characterized in that the bar (2) bears on one of its flat sides (6) a graduated scale (39) which cooperates with a measuring mark (42) on the measuring slide (3).

12. A measuring tool according to claim 1, characterized in that the bar (2) bears on one of its flat sides (6) a ruled grating (12) cooperating with an electronic measuring and indicating device (13) which is accommodated in the measuring slide (3).

## Revendications

1. Instrument de mesure comportant une règle prismatique allongée qui présente deux cotés plats (4, 5) s'étendant longitudinalement, à distance l'un de l'autre, et des côté étroits (7, 8) s'étendant longitudinalement entre les cotés plats (4, 5), et au moins un curseur de mesure (3) guidé avec possibilité de déplacement longitudinal sur la règle (2) et portant un dispositif récepteur (18a) pour recevoir un bec de mesure (19) destiné à y être fixé avec possibilité de démontage, et un autre dispositif récepteur (18c) lié à la règle (2) et destiné au montage avec possibilité de démontage d'un autre bec de mesure (36), les deux dispositifs' récepteurs (18a, 18c) étant situés d'un même côté par rapport à l'axe longitudinal de la règle (2), caractérisé par le fait que le curseur de mesure (3) et la règle (2) sont munis chacun d'un autre dispositif récepteur (18b, 18d) pour le montage avec possibilité de démontage de becs de mesure (19, 36), et par le fait que les deux dispositifs récepteurs de la règle (2) ainsi que les deux dispositifs récepteurs (18a, 18b) du curseur de mesure (3) sont disposés à chaque fois en des côtés opposés par rapport à l'axe longitudinal de la règle (2).

2. Instrument de mesure selon revendication 1, caractérisé par le fait que les dispositifs récepteurs (18) situés sur des côtés opposés par rapport à l'axe longitudinal de la règle (2) sont mutuellement identiques et présentent deux à deux la même distance au coté étroit voisin (7, 8) de la règle (2).

3. Instrument de mesure selon revendication 1, caractérisé par le fait que les dispositifs récepteurs (18) sont tous les quatre identiques et présentent tous la même distance au coté étroit voisin (7, 8) de la règle (2).

4. Instrument de mesure selon revendication 1, caractérisé par le fait que chaque dispositif récepteur (18) présente une surface d'appui (22) s'étendant parallèlement à l'axe longitudinal de la règle (2), et par le fait que les surfaces d'appui (22) sur la règle (2) et sur le curseur de mesure (3) situées du même côté par rapport à l'axe longitudinal de la règle (2) et sont dans un plan commun.

5. Instrument de mesure selon revendication 4, caractérisé par le fait que les surfaces d'appui (22) pour les becs de mesure (19, 36) sont des surfaces planes qui s'étendent parallèlement à l'axe longitudinal de la règle (2) et perpendiculairement à côté plat (5, 6) de cette dernière.

6. Instrument de mesure selon revendication 1, caractérisé par le fait que chaque dispositif récepteur (18) présente un moyen de serrage (25, 26, 37) pour bloquer le bec de mesure y afférent (19, 36).

7. Instrument de mesure selon revendication 6, caractérisé par le fait que le moyen de serrage de chaque dispositif récepteur (18) est constitué par au moins un trou taraudé (25) et par au moins une vis de serrage (26, 37) qui passe par un trou de fixation d'un prolongement pour fixation (28) formé sur le bec de mesure (32).

8. Instrument de mesure selon revendication 1, caractérisé par le fait que, pour positionner correctement le bec de mesure (19, 36) dans le dispositif récepteur concerné (18), chaque dispositif récepteur (18) présente un dispositif de centrage (21) et le bec de mesure (19, 36) présente un dispositif de centrage complémentaire (28).

9. Instrument de mesure selon revendication 8, caractérisé par le fait que l'un des dispositifs de centrage est constitué par une rainure (21) qui s'étend parallèlement à l'axe longitudinal de la règle (2).

10. Instrument de mesure selon revendication 1, caractérisé par le fait que les dispositifs récepteurs (18) de la règle (2) sont aménagés sur un curseur (33) monté sur la règle avec possibilité de coulissement longitudinal et possibilité de blocage sur celle-ci.

11. Instrument de mesure selon revendication 1, caractérisé par le fait que la règle (2) porte, sur l'un de ses côtés plats (6), une graduation de mesure (39) qui coopère avec un repère de mesure (42) sur le curseur de mesure (3).

12. Instrument de mesure selon revendication 1, caractérisé par le fait que la règle (2) porte sur l'un de ses côtés plats (6) un réseau de traits (12) qui coopère avec un dispositif électronique de mesure et d'affichage (13) agencé dans le curseur de mesure (3).

Fig. 1

EP 0 336 015 B1

Fig. 2

Fig. 3

EP 0 336 015 B1

Fig. 4